# EUROPÄISCHE PATENTSCHRIFT

(11) **EP 2 871 119 B1**
(45) Veröffentlichungstag und Bekanntmachung des Hinweises auf die Patenterteilung: **16.01.2019**
(21) Anmeldenummer: 14191861.5
(22) Anmeldetag: 05.11.2014
(51) Int. Cl.: B62J 6/18, B62K 19/30, B62K 19/40, H01R 9/24

(54) **Zweiradrahmen mit einem innerhalb des Rahmens verlaufenden elektrischen Anschlusskabel, Anschlusskabel sowie Stecker und Gegenstecker hierfür**
Bicycle frame with an electrical connecting cable running within the frame, connection cable, as well as plug and mating connector for same
Cadre de bicyclette équipé d'un câble de raccordement électrique s'étendant à l'intérieur du cadre, câble de raccordement ainsi que fiche et contre-fiche

(30) Priorität: 10.11.2013 DE 202013105053 U
(43) Veröffentlichungstag der Anmeldung: 13.05.2015
(73) Patentinhaber: ZEG Zweirad-Einkaufs-Genossenschaft eG, 50739 Köln (DE)
(72) Erfinder: Mühle, Sören, 50825 Köln (DE)
(74) Vertreter: Althaus, Arndt

(56) Entgegenhaltungen:
- EP-B1- 1 439 614
- CN-U- 201 901 226
- DE-A1- 2 509 022
- GB-A- 2 385 216
- US-A- 5 008 782
- US-A- 5 842 714
- US-A1- 2005 126 840
- US-A1- 2009 011 656

## Beschreibung

Die Erfindung betrifft einen Zweiradrahmen, insbesondere Fahrradrahmen, mit mehreren Rahmenrohren und wenigstens einem zumindest teilweise innerhalb des Hohlraums der Rahmenrohe des Rahmens verlaufenden elektrischen Anschlusskabel, welches über eine erste Durchbrechung in den Hohlraum des Rahmens eintritt und über eine zweite Durchbrechung aus dem Hohlraum des Rahmens austritt. Die Erfindung betrifft ferner ein elektrisches Anschlusskabel für am Rahmen eines Zweirades, insbesondere Fahrrades, montierte elektrische Verbraucher, mit zwei mittels einer lösbaren Steckverbindung verbindbaren elektrischen Kabelsträngen, wobei am ersten Kabelstrang ein Stecker mit zylindrischem Steckergehäuse und am zweiten Kabelstrang ein Gegenstecker mit zylindrischem Steckergehäuse angebracht ist und Stecker und Gegenstecker lösbar zu der Steckverbindung zusammensteckbar sind. Die Erfindung betrifft auch den Stecker und den Gegenstecker für ein solches elektrisches Anschlusskabel.

Auch nicht-motorisierte Zweiradfahrzeuge wie insbesondere Fahrräder sind seit vielen Jahren zur Erfüllung der Anforderungen an die Straßenverkehrsordnung in Deutschland mit fest installierten Vorder-und Rücklicht als elektrische Verbraucher ausgestattet, die meist über einen zentralen Dynamo mit Energie versorgt werden. Die Anschlusskabel für das Licht werden meist als durchgehender elektrischer Kabelstrang entweder außen am Rahmen entlang geführt oder auch partiell beispielsweise vom Steuerrohr bis kurz vor dem Anschlusspunkt des Tretlagergehäuses durch den Hohlraum des Unterrohrs hindurchgeführt. Der Eintritt in den Hohlraum und auch der Austritt erfolgt über Durchbrechungen, die auch für Kabelzüge die Schaltzüge genutzt werden könnten und im Regelfall aus Bohrungen mit Durchmessern von weniger als 6 mm, meist 5 mm bestehen.

Seit einigen Jahren bilden Elektrofahrräder, nicht zuletzt aufgrund ökologischer Debatten, einen weiteren Industriezweig für Fahrradhersteller und Fahrradkomponentenhersteller. Elektrofahrräder insbesondere in der Bauart als Pedelec, bei welchem der Elektromotor nur unterstützend zum Pedalieren wirkt, können hierbei mit Motoren mit unterschiedlichen Leistungen ausgestattet werden. Sämtliche Pedelecs weisen eine Motorsteuerung am Lenker, eine Akkueinheit sowie einen Elektromotor als elektrische Komponenten bzw. Verbraucher auf, die über Anschlusskabel miteinander verbunden werden müssen. Im Gegensatz zu den Anschluss-bzw. Versorgungskabeln für Licht ist es bei den zuletzt genannten elektrischen Verbrauchern, nämlich Akkueinheit und Elektromotor, häufiger erforderlich, die elektrische Verbindung zu trennen.

Eine trennbare elektrische Verbindung für elektrische, an Fahrradrahmen verbauter Verbraucher wird beispielsweise in der EP 1439614 B1 beschrieben. Die Trennbarkeit wird durch eine Steckverbindung mit Stecker und Gegenstecker erreicht, die in einer Verteilerbox zusammengesteckt sind, die an der Oberseite des Unterrohrs des Fahrradrahmens montiert ist.

Aus der DE 20 2004 017 896 U1 ist es bekannt, an der Unterseite des Unterrohrs einen Kabelkanal zu befestigen, durch welchen Schaltzüge oder Bremszüge verlegt werden können, wobei endseitig des Kabelkanals Verschlussmittel vorgesehen sind, um einen Feuchtigkeitseintritt in den Kabelkanal zu verhindern.

Aus der DE 20 2009 003 275 U1 ist es bekannt, die Schaltzüge zumindest partiell innerhalb des Hohlraums des Fahrradrahmens zu verlegen, wobei derjenigen Durchbrechung, durch die hindurch die Schaltzüge aus dem Hohlraum herausgeführt werden, noch eine Einbuchtung im Fahrradrahmen zugeordnet ist, um den Schaltzug annähernd in Längsrichtung der Rohre führen zu können.

Aus der gattungsgemäßen US 2009/0011656 A1 ist ein mehradriges Anschlusskabel für elektrische Verbraucher mit einem Stecker an einem ersten Kabelstrang und einem Gegenstecker an einem zweiten Kabelstrang bekannt und die Erfindung geht in den Oberbegriffen der unabhängigen Ansprüche von dieser Entgegenhaltung aus.

Aufgabe der Erfindung ist es, Zweiräder insbesondere hinsichtlich der Wartung und Austauschbarkeit von elektrischen Verbrauchern und der Zuverlässigkeit der elektrischen Kontaktierung zu verbessern.

Diese Aufgabe wird mit der in Anspruch 1 für einen Stecker und in Anspruch 2 für einen Gegenstecker angegebenen Erfindung gelöst. Die Aufgabe wird auch mit dem in Anspruch 4 genannten, den erfindungsgemäßen Stecker und Gegenstecker verwendenden Anschlusskabel sowie eine mit diesem ausgestatteten Fahrradrahmen gelöst.

Bei einem Zweiradrahmen wird gemäß der Erfindung ein elektrisches Anschlusskabel verwendet, welches partiell durch den Hohlraum wenigstens eines Rahmenrohres das Zweiradrahmens geführt wird, und mit einem Steckverbinder, bestehend aus Stecker und Gegenstecker mit jeweils zylindrischem Steckergehäuse, versehen ist, wobei der Außendurchmesser des Steckergehäuses des Steckers und des Steckergehäuses des Gegensteckers kleiner ist als die minimale lichte Weite wenigstens einer der Durchbrechungen, durch die hindurch das Anschlusskabel in den Rahmen eintritt bzw. herausgeführt wird. Vorzugsweise ist der Außendurchmesser kleiner als die lichte Weite beider Durchbrechungen. Bei einem erfindungsgemäßen elektrischen ist am ersten Kabelstrang ein Stecker mit zylindrischem Steckergehäuse und am zweiten Kabelstrang ein Gegenstecker mit zylindrischem Steckergehäuse angebracht und Stecker und Gegenstecker sind lösbar zu der Steckverbindung zusammensteckbar , wobei der Außendurchmesser der vorzugsweise aus Kunststoff wie Polyamid bestehenden und im Spritzguss hergestellten Steckergehäuse kleiner ist als eine lichte Weite einer Durchbrechung, vorzugsweise beider Durchbrechungen am Zweiradrahmen, durch die hindurch das Anschlusskabel zumindest partiell innerhalb eines Hohlraums des Rahmens verlegbar ist. Durch die erfindungsgemäße Maßnahme kann die gesamte Steckverbindung der Stecker im Betriebseinsatz des Zweirades geschützt im Hohlraum des Rahmens liegen, wodurch die Wirkung der Umgebungseinflüsse wie insbesondere Feuchtigkeit erheblich reduziert ist, eine deutlich reduzierte Gefahr besteht, dass die Steckverbindung versehentlich getrennt wird, und zugleich die Optik und das Design des Zweirades nicht durch sichtbare Anbauteile gestört wird. Gleichwohl kann jede entsprechend ausgestaltete elektrische Verbindung gelöst werden, wozu im Regelfall Stecker und Gegenstecker aus der Durchbrechung herausgezogen werden, bevor sie entkoppelt werden. Die Steckverbindung mit Stecker und Gegenstecker kann auch an Anschlusskabeln verwendet werden, die außerhalb des Hohlraums verlegt sind.

Gemäß der Erfindung haben die jeweiligen Steckergehäuse einen maximalen Außendurchmesser, der kleiner ist als 6 mm. Um das Anschlusskabel auch an standardmäßig mit Durchbrechungen versehenen Fahrradrahmen verwenden zu können, ist insbesondere vorteilhaft, wenn der maximale Außendurchmesser des Steckergehäuses kleiner ist als 5 mm und vorzugsweise gleich oder kleiner ist als 4,9 mm ± 0,05 mm.

Gemäß der Erfindung weist das Steckergehäuse des Steckers am Außenumfang eine Stufe zwischen einem kabelseitigen Gehäuseabschnitt und einem die Kontaktpole aufweisenden Polabschnitt auf, wobei der Polabschnitt mit wenigstens einer über die Stufe radial vorspringenden Zentriernase versehen ist. Der Polabschnitt ist zwischen seinem vorderen Stirnende und dem Frontabschnitt der Zentriernase mit einer Ringnut zur Aufnahme eines O-Rings versehen. Über den O-Ring kann auf besonders einfache Weise, insbesondere bei entsprechend angepasster Gestaltung des Steckergehäuses des Gegensteckers, zum einen eine gute Abdichtung zwischen den Steckerteilen (Stecker und Gegenstecker) und zugleich eine ausreichend hohe Haltekraft erzielt werden, die ein unbeabsichtigtes Lösen der Steckverbindung weitestgehend verhindert. Alternativ oder zusätzlich kann der Polabschnitt im axialen Erstreckungsbereich der Zentriernase mit einer radial vorspringenden Rastrippe versehen ist, um die Haltekraft zwischen den Steckerteilen weiter zu erhöhen und die vollständige Arretierung der Steckverbindung auch manuell spürbar anzuzeigen.

Das Steckergehäuse des Gegensteckers kann entsprechend angepasst als Buchsengehäuse mit einem frontseitigen Sackloch versehen sein, wobei die Umgebungswand des Sacklochs mit einer stirnseitig offenen Einziehung zur Aufnahme einer Zentriernase am Stecker versehen ist. Besonders vorteilhaft ist, wenn sich die Zentriernase radial bis zum Außendurchmesser am Gehäuseabschnitt des Steckers erstreckt und/oder wenn die Rippe eine geringere radiale Dicke hat als die Zentriernase, so dass im Montagezustand der Steckverbindung Stecker und Gegenstecker mit ihren Gehäuseabschnitten eine annähernd einheitliche zylindrische Oberfläche bilden. Funktional angepasst an die Rastrippe am Stecker ist vorteilhaft, wenn am Gegenstecker die Umgebungswand des Sacklochs mit einem umlaufenden Rastring zum Hinterfassen der Rastrippe am Polabschnitt versehen ist. Weiter vorzugsweise kann die Einziehung, sowie vorzugsweise ein 180 ° versetzt zur Einziehung liegender Schlitz, den umlaufenden Rastring unterbrechen.

Je nach Verwendungszweck des Anschlusskabels kann der Polabschnitt am Stecker stirnseitig drei oder vier Polöffnungen aufweisen, in die vorzugsweise metallische, mit Adern im Anschlusskabel verbundene drei oder vier Polbuchsen als Kontaktpole eingesetzt sind. In das Sackloch am Gegenstecker können dann entsprechend 3 oder 4 im rückwärtigen Gehäuseabschnitt verankerte und mit Adern im Anschlusskabel verbundene Polstifte hineinragen. Eine Variante mit drei Polöffnungen eignet sich insbesondere bei Anschlusskabel für die elektrische Versorgung oder Steuerung beispielsweise des Elektromotors; ein vieradriges Anschlusskabel und Stecker bzw. Gegenstecker mit vier Polen eignen sich vor allem für den elektrischen Anschluss von Frontlicht und Rücklicht an beispielsweise einen Nabendynamo.

Zweckmäßigerweise sollte der Gehäuseabschnitt am Stecker und der rückwärtige Gehäuseabschnitt des Gegensteckers mit einer Kabeleinführungsöffnung versehen sein, die vorzugsweise im Montagezustand des Kabelabschnitts zumindest partiell mit Vergußmasse oder Kleber gefüllt ist. Ferner ist vorteilhaft, wenn im Steckgehäuse des Steckers und im Steckergehäuse des Gegensteckers jeweils ein Kontaktsockel, vorzugsweise bestehend aus goldbeschichtetem Kupfer, angeordnet ist, an dem integral ein Polstifte oder eine Polbuchsen sowie eine Anschlussklemme für die jeweilige Kabelader ausgebildet sind. Über einen entsprechenden Kontaktsockel im Stecker, der mit den Polbuchsen versehen ist, sowie einen Kontaktsockel, der im Gegenstecker angeordnet ist, für jede Kabelader kann eine äußerst gute und sichere elektrische Kontaktierung erreicht werden. Die Kontaktsockel werden vorzugsweise beim Spritzguss-Urformen der Steckergehäuse mit Kunststoff umformt.

Weitere Vorteile und Ausgestaltungen eines mit Anschlusskabel gemäß der Erfindung versehenen Zweiradrahmens bzw. eines entsprechenden, mit Steckverbindung versehenen Anschlusskabels ergeben sich aus der nachfolgenden Beschreibung und in der Zeichnung schematisch dargestellten Ausführungsbeispielen. In der Zeichnung zeigen:
- Fig. 1.: in perspektivischer Ansicht einen Fahrradrahmen ohne Anbauteile mit im Hohlraum verlaufenden elektrischen Anschlusskabel;
- Fig. 2.: in einer Detailansicht das Einziehen eines Anschlusskabels nebst Steckverbinder in den Hohlraum des Fahrradrahmens aus Fig. E;
- Fig. 3: schematisch vereinfacht einen Steckverbinder mit Stecker und Gegenstecker in Außenansicht auf die Steckergehäuse;
- Fig. 4: eine Schnittansicht durch die Steckverbindung aus Figur 3;
- Fig. 5: schematisch den Stecker in Außenansicht auf sein Steckergehäuse;
- Fig. 6: den Stecker aus Figur 5 im Längsschnitt;
- Fig. 7: den Stecker aus Figur 5 in Ansicht auf die Stirnseite des Steckers;
- Fig. 8: schematisch den Gegenstecker in Außenansicht auf sein Steckergehäuse;
- Fig. 9: den Gegenstecker aus Figur 8 im Längsschnitt;
- Fig. 10: den Gegenstecker aus Figur 8 in Ansicht auf die Stirnseite des Gegensteckers;
- Fig. 11: einen Stecker gemäß einem zweiten Ausführungsbeispiel im Längsschnitt;
- Fig. 12: den Stecker aus Figur 11 in Ansicht auf seine Stirnseite;
- Fig. 13: einen Gegenstecker gemäß einem zweiten Ausführungsbeispiel im Längsschnitt;
- Fig. 14: den Gegenstecker aus Figur 13 in Ansicht auf seine Stirnseite.

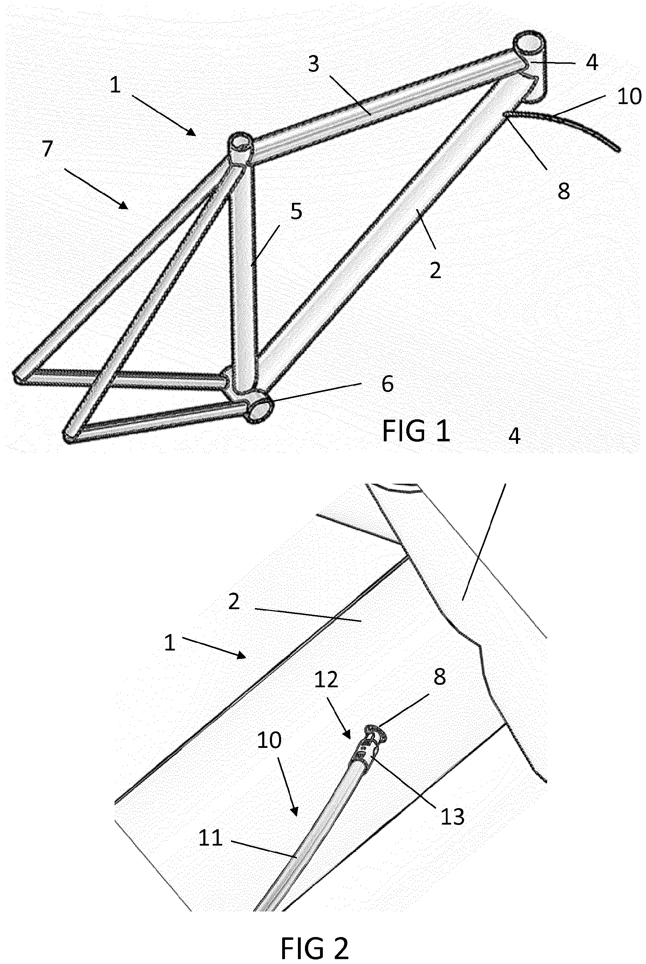

In den Figuren 1 und 2 ist insgesamt mit Bezugszeichen 1 ein aus miteinanderverschweißten Rahmenrohren bestehender Fahrradrahmen bezeichnet, der hier als Diamantrahmen für ein Herrenfahrrad ausgeführt ist und entsprechend ein unteres Rahmenrohr (Unterrohr) 2, ein oberes Rahmenrohr (Oberrohr) 3, ein Lenkerrohr 4, ein Sattelrohr 5 sowie ein Tretlagergehäuse 6 aufweist, die zueinander zu dem biegesteifen Fahrradrahmen 1 miteinander verschweißt sind. Auch die am Sattelrohr 5 bzw. am Tretlagergehäuse angeschweißte Hintergabelkonstruktion 7 ist in Figur 1 angedeutet. Nahe des Lenkerrohrs 4 weist das Unterrohr 2 eine erste Durchbrechung 8 auf, durch die hindurch ein Anschlusskabel 10 in den Hohlraum des Unterrohrs 2 hineingeführt werden kann, um dann durch eine zweite Durchbrechung (nicht dargestellt) beispielsweise an der Unterseite des Unterrohrs 2 nahe des Tretlagergehäuses 6 aus dem Hohlraum des Unterrohrs wieder auszutreten. Wie Figur 2 gut erkennen lässt, ist das Anschlusskabel 10 mit einem ersten Kabelstrang 11 versehen, der an seinem freien Ende einen Stecker 12 trägt, dessen Steckergehäuse 13 Außenabmessungen aufweist, die derart angepasst sind, dass der maximale Außendurchmesser des Steckergehäuses 13 des Steckers 12 geringfügig kleiner ist als der Durchmesser bzw. die lichte Weite der hier von einer Bohrung gebildeten Durchbrechung 8.

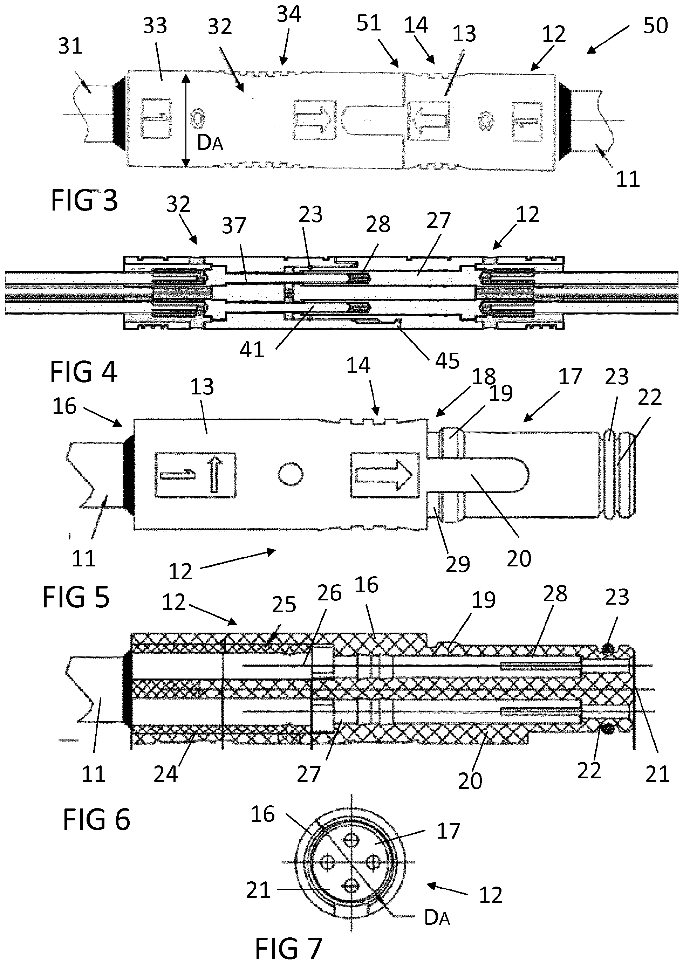

Die Figuren 3 bis 10, auf die nun Bezug genommen wird, zeigen den Aufbau und das Konstruktionsprinzip einer einen entsprechenden Stecker 12 umfassenden und in den Hohlraum eines Fahrradrahmens einziehbaren Steckverbindung 50, die von dem Stecker 12 am ersten Kabelstrang 11 sowie einem Gegenstecker 32 an einem zweiten Kabelstrang 31 gebildet wird, die lösbar zusammensteckbar sind und eine elektrischen Kontaktierung der Adern in den Anschlusskabel 11, 31 in zusammengestecktem Zustand bewirken. Bereits die Figur 3 lässt gut erkennen, dass der Außendurchmesser D_{A} sowohl des zylindrischen Steckergehäuses 13 des Steckers 12 als auch der Außendurchmesser des zylindrischen Steckergehäuses 33 des Gegensteckers 32 zueinander gleich groß sind und aufeinander abgestimmt sind. Das Steckergehäuse 33 des Gegensteckers 12 ist als Buchsengehäuse ausgebildet und hat quasi über seine gesamte Länge einen gleichbleibenden Außendurchmesser, wobei etwa mittig mittels Rillen ein Griffabschnitt 34 gebildet wird. Auch am Steckergehäuse 13 des Stecker 12 ist mittels Rillen ein Griffabschnitt 14 gebildet, der sich allerdings nahe der Trennebene 51 zwischen den Steckerteilen der Steckverbindung 50 befindet. Figur 5 zeigt den Stecker 12 in Einzeldarstellung im Detail. Das Steckergehäuse 13 weist einen hinteren, kabelseitigen Gehäuseabschnitt 16, welchen der Griffabschnitt 14 ausgebildet ist, sowie einen vorderen Polabschnitt 17 auf, dessen Außendurchmesser ab einer Stufe 18 gegenüber dem größeren Außendurchmesser des Gehäuseabschnitts zurückspringt. Am Außenumfang des Polabschnitts 17 ist, angrenzend an die Stufe 18, eine Rastrippe 19 ausgebildet, die sich annähernd vollständig ringförmig um den Polabschnitt 17 erstreckt, allerdings eine geringere Dicke hat als der Außendurchmesser des Gehäuseabschnitts 16. Zwischen Stufe 18 und Rastrippe 19 entsteht entsprechend eine Rastnut 29.In Längsrichtung des Steckergehäuses 13 erstreckt sich, in Verlängerung des Gehäuseabschnitts 16 und ausgehend von der Stufe 18 eine Zentriernase 20 über etwa die halbe Länge des Polabschnitts 17. Die Zentriernase ist als Steg mit gerundeter Frontseite ausgebildet, wobei die Dicke der Zentriernase 20 hier derart angepasst ist, dass sie sich bis zum Außenumfang des Gehäuseabschnitts 16 erstreckt. Angrenzend an die Stirnseite 21 des Polabschnitts 17 ist dessen außen Umfang mit einer Ringnut 22 zur Aufnahme eines O- Rings 23 versehen.

Das Steckergehäuse 13 ist im Innern, wie Figur 6 gut erkennen lässt, partiell hohl, wobei im Gehäuseabschnitt 16 eine zur Hinterseite des Steckergehäuses 13 offene sacklochartige Kabeleinführungsöffnung 24 ausgebildet ist, in welche das Anschlusskabel 11 mit seiner Kabeladern eintaucht und mit jeder Kabelader an einer Anschlussklemme 26 eines Kontaktsockels 27 angeschlossen ist, der sich bis in den Polabschnitt 17 hinein erstreckt und dort eine Polbuchse 28 aufweist. Im gezeigten Ausführungsbeispiel sind für den vierpoligen Stecker 12 entsprechend vier Kontaktsockel 27 vorgesehen, wodurch der Stecker zwölf vier voneinander getrennte Polbuchsen 28 (vgl. Fig. 7) aufweist. Jede Polbuchse 28 kann beispielsweise einen Durchmesser von 0,6 mm aufweisen und durch die relativ langen Polbuchsen 28 kann eine relativ lange effektive Kontaktlänge erreicht werden. Die Kabeleinführungsöffnung 24 ist im Montagezustand des Anschlusskabels 11, nachdem die einzelnen Kabellitzen der Kabeladern mit einer Anschlussklemme 26 des Kontaktesockels 27 verbunden wurden, mit Kleber oder Vergußmasse 25 verfüllt, um Feuchtigkeitseintritt von der Rückseite des Steckergehäuses 13 zu verhindern. Die Stirnseite 21 des Steckergehäuses besteht wiederum aus angespritztem Kunststoff, wodurch keine metallischen Teile am Stecker 12 freiliegen.

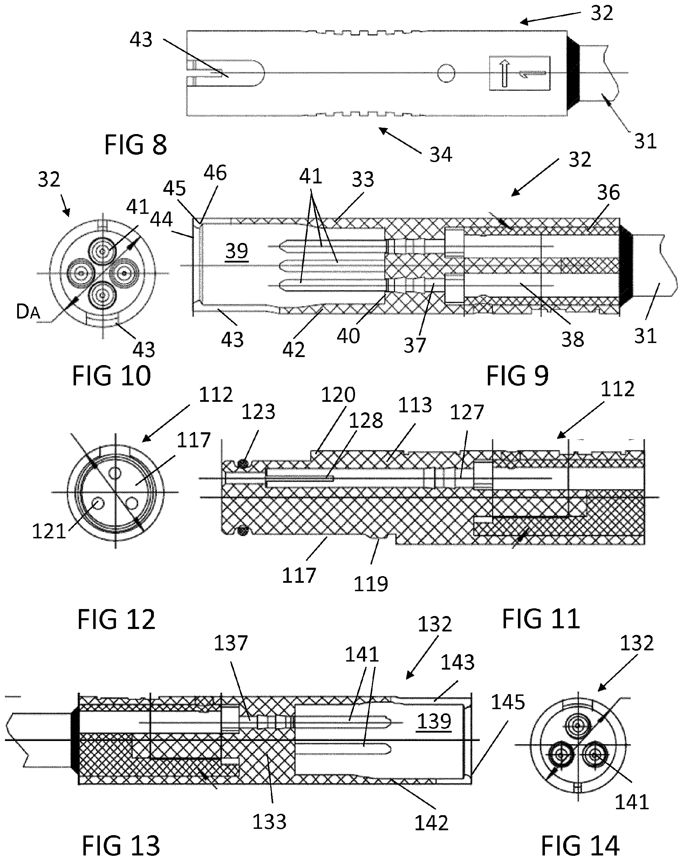

Die Figuren 8 bis 10 zeigen im Detail den 4-poligen Gegenstecker 32 zum Zusammenwirken mit dem Stecker 12. Das Steckergehäuse 33 des Gegensteckers 32 ist als Buchsengehäuse ausgebildet und weist wiederum rückseitig eine Kabeleinführungsöffnung 36 für das Anschlusskabel 31 auf. Auch im Steckergehäuse 33 ist für jede Kabeladler ein Kontaktsockel 37, vorzugsweise bestehend aus goldbeschichteten Kupfer, angeordnet, der von dem Kunststoff des Steckergehäuses 31 umspritzt ist. Die Anschlussklemmen 38 des Kontaktsockels 37 ragen in die sacklochartige Kabeleinführungsöffnung 36 hinein, damit dort jeweils eine der Kabellitzen der Kabeladern des Anschlusskabels 31 an eine Anschlussklemme 38 angeschlossen werden kann. Im Montagezustand des Anschlusskabels 31 ist auch die Kabeleinführungsöffnung 31 mit Vergußmasse oder dergleichen um das Kabel herum ausgefüllt. Das Steckergehäuse 33 weist frontseitig ein Sackloch 39 auf, wobei über den Boden 40 des Sacklochs 39 jeweils ein Polstift 41 sich über etwa die halbe Tiefe des Sacklochs 39 erstreckt. Die Umgebungswand 42 des Sacklochs 39 ist mit einer stirnseitig offenen Einziehung 43 versehen, deren Form vorzugsweise passgenau an die Form der Zentriernase (20) am Stecker (12) angepasst ist. An der Innenseite der Umgebungswand 42, hier unmittelbar an der Stirnseite 44 des Gegensteckers 32, ist ein umlaufender Rastring 45 ausgebildet, der angepasst ist, am Stecker (12, Fig. 5) die Rastrippe (19) zu hinterfassen und in die Rastnut (29) einzutauchen. Der Rastring 45 wird hierbei im gezeigten Ausführungsbeispiel nur von der Einziehung 43 sowie einem Schlitz 46 unterbrochen, der um 180° versetzt zur Einziehung in der Umfangswand 42 ausgebildet ist.

Im Montagezustand von Stecker 12 und Gegensteckers 32 haben, wie insbesondere Figur 4 gut erkennen lässt, die Polstifte 41 und die Polbuchsen 28 eine Kontaktlänge von mehr als 2 mm. Der Rastring 45 sowie der O-Ring 23 sorgen für eine gute Abdichtung gegenüber Feuchtigkeit eintritt bis zu den elektrischen Kontaktbereichen der Kontaktsockel sowie zugleich für relativ hohe Klemmkräfte zwischen den beiden Steckerteilen der Steckverbindung 50, wodurch ein unbeabsichtigtes Lösen der Steckverbindung 50 verhindert werden kann.

Die Figuren 11 und 12 zeigen einen Stecker 112 mit drei Polbuchsen 128 im Polabschnitt 117 des Steckergehäuses 113. Die Stirnseite 121 des Polabschnitts 117 hat entsprechend nur drei Eintrittslöcher für Polstifte 141 am Gegenstecker 132, der in den Figuren 13 und 14 gezeigt ist. Ansonsten haben der Stecker 112 und der Gegenstecker 132 denselben Aufbau wie beim vorherigen Ausführungsbeispiel und Haltekraft und Abdichtung werden über Ohrring 122 am Polabschnitt 127 sowie den Rastring 145 an der Innenseite der Umgebungswand 142 des Sacklochs 139 und die Rastrippe 119 am Polabschnitt 117 erreicht. Um eine korrekte elektrische Kontaktierung zu erreichen, sind ferner wir vom vorherigen Ausführungsbeispiel eine zentrieren Nase 120 am Stecker 112 und eine randoffene Einziehung 143 am Gegensteckers 132 vorgesehen. Der Außendurchmesser der Steckergehäuse 113 sowie 133 ist wiederum kleiner als 5 mm, um ein mit Stecker 112 bzw. gegen Stecker 132 versehenes Anschlusskabel gegebenenfalls auch in den Hohlraum eines Fahrradrahmens eines Zweirads einziehen zu können.

Für den Fachmann ergeben sich aus der vorhergehenden Beschreibung zahlreiche Modifikationen, die in den Schutzbereich der anliegenden Ansprüche fallen sollen. Die Erfindung ist nicht durch die Ausführungsbeispiele begrenzt.

## Patentansprüche

1. Stecker mit zylindrischem Steckergehäuse für ein elektrisches Anschlusskabel für am Rahmen eines Zweirades, insbesondere Fahrrades, montierte elektrische Verbraucher, wobei der Stecker an einem ersten Kabelstrang (11) anbringbar ist und mit einem an einem zweiten Kabelstrang (31) anbringbaren Gegenstecker (32; 132) zusammensteckbar ist, **dadurch gekennzeichnet, dass** der maximale Außendurchmesser (D_{A}) des Steckergehäuses kleiner ist als 6 mm und das Steckergehäuse (13; 113) am Außenumfang eine Stufe (18) zwischen einem kabelseitigen Gehäuseabschnitt (16) und einem Kontaktpole aufweisenden Polabschnitt (17) aufweist, wobei der Polabschnitt (17) mit wenigstens einer über die Stufe radial vorspringenden Zentriernase (20) versehen ist, und wobei der Polabschnitt (17) zwischen seinem vorderen Stirnende (21) und dem Frontabschnitt der Zentriernase (20) mit einer Ringnut (22) zur Aufnahme eines O-Rings (23) versehen ist.

2. Gegenstecker mit zylindrischem Steckergehäuse für ein elektrisches Anschlusskabel für am Rahmen eines Zweirades, insbesondere Fahrrades, montierte elektrische Verbraucher, insbesondere zum Zusammenwirken mit dem Stecker nach Anspruch 1, wobei der Gegenstecker an einem zweiten Kabelstrang (31) anbringbar ist und ein zylindrisches Steckergehäuse (33; 133) aufweist und mit einem an einem ersten Kabelstrang anbringbaren Stecker zusammensteckbar ist, **dadurch gekennzeichnet, dass** der maximale Außendurchmesser (D_{A}) des Steckergehäuses kleiner ist als 6 mm, wobei das Steckergehäuse (33; 133) als Buchsengehäuse mit einem frontseitigen Sackloch (39; 139) versehen ist, und wobei eine Umgebungswand (42; 142) des Sacklochs mit einer stirnseitig offenen Einziehung (43; 143) zur Aufnahme einer Zentriernase versehen ist, die an dem mit dem Gegenstecker zusammensteckbaren Stecker ausgebildet ist.

3. Stecker nach Anspruch 1 oder Gegenstecker nach Anspruch 2, **dadurch gekennzeichnet, dass** der maximale Außendurchmesser (D_{A}) des Steckergehäuses (13; 113; 33; 133) kleiner ist als 5 mm und vorzugsweise 4,9 mm ± 0,05 mm beträgt.

4. Elektrisches Anschlusskabel für am Rahmen eines Zweirades, insbesondere Fahrrades, montierte elektrische Verbraucher, mit zwei mittels einer lösbaren Steckverbindung (50; 150) verbindbaren elektrischen Kabelsträngen (11, 31), wobei am ersten Kabelstrang (11) ein Stecker (12;112) nach Anspruch 1 mit zylindrischem Steckergehäuse (13; 113) und am zweiten Kabelstrang (31) ein Gegenstecker (32; 132) mit zylindrischem Steckergehäuse (33; 133) nach Anspruch 2 angebracht ist und Stecker und Gegenstecker lösbar zu der Steckverbindung (50; 150) zusammensteckbar sind, und wobei das Anschlusskabel zumindest partiell innerhalb eines Hohlraums eines Zweiradrahmens verlegbar ist, **dadurch gekennzeichnet, dass** der maximale Außendurchmesser (D_{A}) der jeweiligen Steckergehäuse kleiner ist als 6 mm und durch eine Durchbrechung am Zweiradrahmen hindurch verlegbar ist, dass das Steckergehäuse (13; 113) des Steckers am Außenumfang eine Stufe (18) zwischen einem kabelseitigen Gehäuseabschnitt (16) und einem Kontaktpole aufweisenden Polabschnitt (17) aufweist, wobei der Polabschnitt (17) mit wenigstens einer über die Stufe radial vorspringenden Zentriernase (20)versehen ist, dass der Polabschnitt (17) zwischen seinem vorderen Stirnende (21) und dem Frontabschnitt der Zentriernase (20) mit einer Ringnut (22) zur Aufnahme eines O-Rings (23) versehen ist, und dass das Steckergehäuse (33; 133) des Gegensteckers als Buchsengehäuse mit einem frontseitigen Sackloch (39; 139) versehen ist, wobei die Umgebungswand (42; 142) des Sacklochs mit einer stirnseitig offenen Einziehung (43; 143) zur Aufnahme einer Zentriernase am Stecker versehen ist.

5. Elektrisches Anschlusskabel nach Anspruch 4, **dadurch gekennzeichnet, dass** der maximale Außendurchmesser (D_{A}) des jeweiligen Steckergehäuses (13; 113; 33; 133) kleiner ist als 5 mm und vorzugsweise 4,9 mm ± 0,05 mm beträgt.

6. Stecker nach einem der Ansprüche 1 oder 3 oder Anschlusskabel nach Anspruch 4 oder 5, **dadurch gekennzeichnet, dass** sich die Zentriernase (20) in Längsrichtung des Steckergehäuses in Verlängerung des Gehäuseabschnitts (16) ausgehend von der Stufe (18) erstreckt, wobei die Zentriernase vorzugsweise als Steg mit gerundeter Frontseite ausgebildet ist.

7. Stecker oder Anschlusskabel nach einem der vorhergehenden Ansprüche, **dadurch gekennzeichnet, dass** der Polabschnitt (17) im axialen Erstreckungsbereich der Zentriernase (20) mit einer radial vorspringenden Rastrippe (19) versehen ist, wobei vorzugsweise die Rastrippe (19) eine geringere radiale Dicke hat als die Zentriernase (20).

8. Stecker oder Anschlusskabel nach einem der vorhergehenden Ansprüche , **dadurch gekennzeichnet, dass** sich die Zentriernase (20) radial bis zum Außendurchmesser am Gehäuseabschnitt (16) des Steckers erstreckt.

9. Gegenstecker nach Anspruch 2 oder Anschlusskabel nach einem der vorhergehenden Ansprüche , **dadurch gekennzeichnet, dass** die Umgebungswand (42) des Sacklochs (39) mit einem umlaufenden Rastring (45) zum Hinterfassen der Rastrippe (19) am Polabschnitt (17) versehen ist, wobei vorzugsweise die Einziehung (43), sowie weiter vorzugsweise ein 180 ° versetzt zur Einziehung liegender Schlitz (46), den umlaufenden Rastring (45) unterbrechen.

10. Stecker oder Anschlusskabel nach einem der vorhergehenden, **dadurch gekennzeichnet, dass** der Polabschnitt (17) am Stecker stirnseitig drei oder vier Polöffnungen aufweist, in denen vorzugsweise metallische, mit Adern im Anschlusskabel verbundene Polbuchsen (28; 128) als Kontaktpole angeordnet sind.

11. Gegenstecker oder Anschlusskabel nach einem der vorhergehenden Ansprüche, **dadurch gekennzeichnet, dass** in das Sackloch (39, 139) am Gegenstecker 3 oder 4 im rückwärtigen Gehäuseabschnitt verankerte und mit Adern im Anschlusskabel verbundene Polstifte (41; 141) hineinragen.

12. Anschlusskabel nach einem der vorhergehenden Ansprüche, **dadurch gekennzeichnet, dass** der Gehäuseabschnitt am Stecker und der rückwärtige Gehäuseabschnitt des Gegensteckers mit einer Kabeleinführungsöffnung (24; 36) versehen ist, die im Montagezustand des Kabelabschnitts zumindest partiell mit Vergußmasse oder Kleber gefüllt ist.

13. Stecker oder Anschlusskabel nach einem der vorhergehenden Ansprüche, **dadurch gekennzeichnet, dass** im Steckergehäuse des Steckers für jede Kabelader jeweils ein Kontaktsockel (27; 127), vorzugsweise bestehend aus goldbeschichtetem Kupfer, angeordnet ist, an dem integral jeweils ein Polstift oder eine Polbuchsen sowie eine Anschlussklemme für die jeweilige Kabelader ausgebildet sind.

14. Gegenstecker oder Anschlusskabel nach einem der vorhergehenden Ansprüche , **dadurch gekennzeichnet, dass** im Steckergehäuse des Gegensteckers für jede Kabelader jeweils ein Kontaktsockel (37; 137), vorzugsweise bestehend aus goldbeschichtetem Kupfer, angeordnet ist, an dem integral jeweils ein Polstift oder eine Polbuchsen sowie eine Anschlussklemme für die jeweilige Kabelader ausgebildet sind.

15. Zweiradrahmen, insbesondere Fahrradrahmen, mit mehreren Rahmenrohren (2, 3, 5) und wenigstens einem zumindest teilweise innerhalb des Hohlraums der Rahmenrohe des Rahmens (1) verlaufenden elektrischen Anschlusskabel(10), welches über eine erste Durchbrechung (8) in den Hohlraum des Rahmens eintritt und über eine zweite Durchbrechung aus dem Hohlraum des Rahmens austritt, **dadurch gekennzeichnet, dass** das elektrische Anschlusskabel (10) gemäß einem der Ansprüche 4 bis 14 ausgebildet ist, wobei der maximale Außendurchmesser (D_{A}) des jeweiligen Steckergehäuses kleiner ist als 6 mm , und vorzugweise die Durchbrechungen eine lichte Weite von maximal 7 mm, vorzugsweise maximal 6 mm aufweisen und/oder aus Bohrungen bestehen.

## Claims

1. Plug having a cylindrical plug housing for an electric connecting cable for electrical consumers mounted on the frame of a cycle, in particular bicycle, wherein the plug is attachable to a first cable harness (11) and can be plugged together with a mating plug (32; 132) which is attachable to a second cable harness (31), **characterized in that** the maximum outer diameter (D_{A}) of the plug housing is smaller than 6 mm, and the plug housing (13; 113) has, on the outer circumference, a step (18) between a cable-side housing portion (16) and a pole portion (17) having contact poles, wherein the pole portion (17) is provided with at least one centring lug (20) projecting radially over the step, and wherein the pole portion (17) is provided between its front end face (21) and the front portion of the centring lug (20) with an annular groove (22) for receiving an O-ring (23).

2. Mating plug with a cylindrical plug housing for an electric connecting cable for electrical consumers mounted on the frame of a cycle, in particular bicycle, in particular for interaction with the plug according to Claim 1, wherein the mating plug is attachable to a second cable harness (31) and has a cylindrical plug housing (33; 133) and can be plugged together with a plug which is attachable to a first cable harness, **characterized in that** the maximum outer diameter (D_{A}) of the plug housing is smaller than 6 mm, wherein the plug housing (33; 133) as a socket housing is provided with a front-side blind hole (39; 139), and wherein a surrounding wall (42; 142) of the blind hole is provided with a recess (43; 143), which is open on the end side, for receiving a centring lug which is formed on the plug which can be plugged together with the mating plug.

3. Plug according to Claim 1 or mating plug according to Claim 2, **characterized in that** the maximum outer diameter (D_{A}) of the plug housing (13; 113; 33; 133) is smaller than 5 mm and is preferably 4.9 mm ± 0.05 mm.

4. Electric connecting cable for electrical consumers mounted on the frame of a cycle, in particular bicycle, with two electric cable harnesses (11, 31) which are connectable by means of a releasable plug-in connection (50; 150), wherein a plug (12; 112) according to Claim 1 having a cylindrical plug housing (13; 113) is attached to the first cable harness (11), and a mating plug (32; 132) having a cylindrical plug housing (33; 133) according to Claim 2 is attached to the second cable harness (31), and plug and mating plug can be plugged releasably together to form the plug-in connection (50; 150), and wherein the connecting cable can be at least partially laid within a cavity of a cycle frame, **characterized in that** the maximum outer diameter (D_{A}) of the respective plug housing is smaller than 6 mm and can be laid through an opening on the cycle frame, **in that** the plug housing (13; 113) of the plug has, on the outer circumference, a step (18) between a cable-side housing portion (16) and a pole portion (17) having contact poles, wherein the pole portion (17) is provided with at least one centring lug (20) projecting radially over the step, **in that** the pole portion (17) between its front end face (21) and the front portion of the centring lug (20) is provided with an annular groove (22) for receiving an O ring (23), and **in that** the plug housing (33; 133) of the mating plug as a socket housing is provided with a front-side blind hole (39; 139), wherein the surrounding wall (42; 142) of the blind hole is provided with a recess (43; 143) which is open on the end side for receiving a centring lug on the plug.

5. Electric connecting cable according to Claim 4, **characterized in that** the maximum outer diameter (D_{A}) of the respective plug housing (13; 113; 33; 133) is smaller than 5 mm and is preferably 4.9 mm ± 0.05 mm.

6. Plug according to one of Claims 1 or 3 or connecting cable according to Claim 4 or 5, **characterized in that** the centring lug (20) extends from the step (18) in the longitudinal direction of the plug housing as an extension of the housing portion (16), wherein the centring lug is preferably designed as a web with a rounded front side.

7. Plug or connecting cable according to one of the preceding claims, **characterized in that**, in the axial region of extent of the centring lug (20), the pole portion (17) is provided with a radially projecting latching rib (19), wherein the latching rib (19) preferably has a smaller radial thickness than the centring lug (20).

8. Plug or connecting cable according to one of the preceding claims, **characterized in that** the centring lug (20) extends radially as far as the outer diameter on the housing portion (16) of the plug.

9. Mating plug according to Claim 2 or connecting cable according to one of the preceding claims, **characterized in that** the surrounding wall (42) of the blind hole (39) is provided with an encircling latching ring (45) for gripping behind the latching rib (19) on the pole portion (17), wherein preferably the recess (43), and, furthermore preferably, a slot (46) lying offset by 180° with respect to the recess, interrupt the encircling latching ring (45).

10. Plug or connecting cable according to one of the preceding claims, **characterized in that** the pole portion (17) on the plug has three or four pole openings on the end side, in which preferably metallic pole sockets (28; 128) which are connected to wires in the connecting cable are arranged as contact poles.

11. Mating plug or connecting cable according to one of the preceding claims, **characterized in that** pole pins (41; 141) which are anchored on the mating plug 3 or 4 in the rear housing portion and are connected to wires in the connecting cable project into the blind hole (39, 139).

12. Connecting cable according to one of the preceding claims, **characterized in that** the housing portion on the plug and the rear housing portion of the mating plug are provided with a cable-insertion opening (24; 36) which is at least partially filled with casting compound or adhesive in the installed state of the cable portion.

13. Plug or connecting cable according to one of the preceding claims, **characterized in that** a respective contact base (27; 127), preferably composed of gold-coated copper, is arranged for each cable wire in the plug housing of the plug, and on which contact base a pole pin or a pole socket and also a connecting terminal for the respective cable wires are in each case integrally formed.

14. Mating plug or connecting cable according to one of the preceding claims, **characterized in that** a respective contact base (37; 137), preferably composed of gold-coated copper, for each cable wire is arranged in the plug housing of the mating plug, and a pole pin or a pole socket and also a connecting terminal for the respective cable wires are in each case integrally formed on said contact base.

15. Cycle frame, in particular bicycle frame, with a plurality of frame tubes (2, 3, 5) and at least one electric connecting cable (10) which at least partially runs inside the cavity of the frame tube of the frame (1) and enters the cavity of the frame via a first opening (8) and exits from the cavity of the frame via a second opening, **characterized in that** the electric connecting cable (10) is designed according to one of Claims 4 to 14, wherein the maximum outer diameter (D_{A}) of the respective plug housing is smaller than 6 mm, and the apertures preferably have a clear width of at maximum 7 mm, preferably at maximum 6 mm, and/or consist of bores.

## Revendications

1. Fiche ayant un boîtier de fiche cylindrique pour un câble de raccordement électrique pour des récepteurs électriques montés sur le cadre d'un deux roues, notamment d'une bicyclette, la fiche pouvant être montée sur un premier faisceau de câbles (11) et pouvant être assemblée par enfichage avec une fiche homologue (32 ; 132) pouvant être montée sur un deuxième faisceau de câbles (31), **caractérisée en ce que** le diamètre extérieur maximal (D_{A}) du boîtier de fiche est inférieur à 6 mm et le boîtier de fiche (13 ; 113) possède sur le pourtour extérieur un gradin (18) entre une portion de boîtier (16) côté câble et une portion de pôle (17) possédant un pôle de contact, la portion de pôle (17) étant pourvue d'au moins un tenon de centrage (20) qui fait saillie dans le sens radial au-dessus du gradin, et la portion de pôle (17) étant pourvue, entre son extrémité frontale avant (21) et la portion frontale du tenon de centrage (20), d'une rainure annulaire (22) destinée à accueillir un joint torique (23).

2. Fiche homologue ayant un boîtier de fiche cylindrique pour un câble de raccordement électrique pour des récepteurs électriques montés sur le cadre d'un deux roues, notamment d'une bicyclette, notamment destinée à coopérer avec la fiche selon la revendication 1, la fiche homologue pouvant être montée sur un deuxième faisceau de câbles (31) et possédant un boîtier de fiche cylindrique (33 ; 133) et pouvant être assemblée par enfichage avec une fiche qui peut être montée sur un premier faisceau de câbles, **caractérisée en ce que** le diamètre extérieur maximal (D_{A}) du boîtier de fiche est inférieur à 6 mm, le boîtier de fiche (33 ; 133) en tant que boîtier de douille étant pourvu d'un trou borgne (39 ; 139) côté avant et une paroi entourante (42 ; 142) du trou borgne étant pourvue d'un renfoncement (43 ; 143) ouvert du côté frontal destiné à accueillir un tenon de centrage qui est formé sur la fiche pouvant être assemblée par enfichage avec la fiche homologue.

3. Fiche selon la revendication 1 ou fiche homologue selon la revendication 2, **caractérisée en ce que** le diamètre extérieur maximal (D_{A}) du boîtier de fiche (13 ; 113 ; 33 ; 133) est inférieur à 5 mm et de préférence égal à 4,9 mm ±0,05 mm.

4. Câble de raccordement électrique pour des récepteurs électriques montés sur le cadre d'un deux roues, notamment d'une bicyclette, comprenant deux faisceaux de câbles électriques (11, 31) pouvant être reliés au moyen d'une connexion par enfichage (50 ; 150) amovible, une fiche (12 ; 112) selon la revendication 1 ayant un boîtier de fiche cylindrique (13 ; 113) étant montée sur le premier faisceau de câbles (11) et une fiche homologue (32 ; 132) ayant un boîtier de fiche cylindrique (33 ; 133) selon la revendication 2 étant montée sur le deuxième faisceau de câbles (31) et la fiche et la fiche homologue pouvant être assemblées par enfichage de manière amovible pour former la connexion par enfichage (50 ; 150), et le câble de raccordement pouvant au moins partiellement être posé à l'intérieur d'un espace creux d'un cadre de deux roues, **caractérisé en ce que** le diamètre extérieur maximal (D_{A}) du boîtier de fiche respectif est inférieur à 6 mm et peut être posé à travers une percée sur le cadre de deux roues, **en ce que** le boîtier de fiche (13 ; 113) de la fiche possède sur le pourtour extérieur un gradin (18) entre une portion de boîtier (16) côté câble et une portion de pôle (17) possédant un pôle de contact, la portion de pôle (17) étant pourvue d'au moins un tenon de centrage (20) qui fait saillie dans le sens radial au-dessus du gradin, **en ce que** la portion de pôle (17) est pourvue, entre son extrémité frontale avant (21) et la portion frontale du tenon de centrage (20), d'une rainure annulaire (22) destinée à accueillir un joint torique (23), et **en ce que** le boîtier de fiche (33 ; 133) de la fiche homologue en tant que boîtier de douille est pourvu d'un trou borgne (39 ; 139) côté avant, la paroi entourante (42 ; 142) du trou borgne étant pourvue d'un renfoncement (43 ; 143) ouvert du côté frontal destiné à accueillir un tenon de centrage sur la fiche.

5. Câble de raccordement électrique selon la revendication 4, **caractérisé en ce que** le diamètre extérieur maximal (D_{A}) du boîtier de fiche (13 ; 113 ; 33 ; 133) respectif est inférieur à 5 mm et de préférence égal à 4,9 mm ±0,05 mm.

6. Fiche selon l'une des revendications 1 ou 3 ou câble de raccordement selon la revendication 4 ou 5, caractérisé(e) en ce que le tenon de centrage (20) s'étend dans la direction longitudinale du boîtier de fiche dans la prolongation de la portion de boîtier (16) à partir du gradin (18), le tenon de centrage étant de préférence réalisé sous la forme d'une arête avec un côté frontal arrondi.

7. Fiche ou câble de raccordement selon l'une des revendications précédentes, caractérisé(e) en ce que la portion de pôle (17) est pourvue, dans la zone d'extension axiale du tenon de centrage (20), d'une nervure d'encliquetage (19) faisant saillie dans le sens radial, la nervure d'encliquetage (19) ayant de préférence une épaisseur radiale inférieure à celle du tenon de centrage (20).

8. Fiche ou câble de raccordement selon l'une des revendications précédentes, caractérisé(e) en ce que le tenon de centrage (20) s'étend dans le sens radial jusqu'au diamètre extérieur sur la portion de boîtier (16) de la fiche.

9. Fiche homologue selon la revendication 2 ou câble de raccordement selon l'une des revendications précédentes, caractérisé(e) en ce que la paroi entourante (42) du trou oblong (39) est pourvue d'une bague d'encliquetage (45) circonférentielle destinée à venir en prise par l'arrière avec la nervure d'encliquetage (19) sur la portion de pôle (17), la bague d'encliquetage (45) étant interrompue de préférence par le renfoncement (43) ainsi qu'également de préférence par une entaille (46) décalée de 180° par rapport au renfoncement.

10. Fiche ou câble de raccordement selon l'une des revendications précédentes, caractérisé(e) en ce que la portion de pôle (17) sur la fiche possède du côté frontal trois ou quatre ouvertures de pôle dans lesquelles sont disposées des douilles de pôle (28 ; 128) de préférence métalliques faisant office de pôles de contact et reliées aux fils dans le câble de raccordement.

11. Fiche homologue ou câble de raccordement selon l'une des revendications précédentes, caractérisé(e) en ce que 3 ou 4 broches de pôle (41 ; 141) ancrées dans la portion de boîtier arrière et reliées aux fils dans le câble de raccordement font saillie dans le trou borgne (39, 139) au niveau de la fiche homologue.

12. Câble de raccordement selon l'une des revendications précédentes, **caractérisé en ce que** la portion de boîtier sur la fiche et la portion de boîtier arrière de la fiche homologue est pourvue d'une ouverture d'introduction de câble (24 ; 36) qui, à l'état de montage de la portion de câble, est au moins partiellement remplie d'une masse de scellement ou d'un adhésif.

13. Fiche ou câble de raccordement selon l'une des revendications précédentes, caractérisé(e) en ce que dans le boîtier de fiche de la fiche, pour chaque fil de câble, est respectivement disposé un socle de contact (27 ; 127), de préférence constitué de cuivre revêtu d'or, sur lequel sont respectivement formée(s) intégralement une broche de pôle ou une douille de pôle ainsi qu'une borne de raccordement pour le fil de câble respectif.

14. Fiche homologue ou câble de raccordement selon l'une des revendications précédentes, caractérisé(e) en ce que dans le boîtier de fiche de la fiche homologue, pour chaque fil de câble, est respectivement disposé un socle de contact (37 ; 137), de préférence constitué de cuivre revêtu d'or, sur lequel sont respectivement formées intégralement une broche de pôle ou une douille de pôle ainsi qu'une borne de raccordement pour le fil de câble respectif.

15. Cadre de deux roues, notamment cadre de bicyclette, comprenant plusieurs tubes de cadre (2, 3, 5) et au moins un câble de raccordement (10) électrique qui s'étend au moins partiellement à l'intérieur de l'espace creux des tubes de cadre du cadre (1), lequel pénètre dans l'espace creux du cadre par une première percée (8) et sort de l'espace creux du cadre par une deuxième percée, **caractérisé en ce que** le câble de raccordement (10) électrique est configuré selon l'une des revendications 4 à 14, le diamètre extérieur maximal (D_{A}) du boîtier de fiche respectif étant inférieur à 6 mm et les percées possédant de préférence une largeur utile maximale de 7 mm, de préférence maximale de 6 mm et/ou se composant de perçages.
